(19) Europäisches Patentamt
European Patent Office
Office européen des brevets

(11) **EP 2 221 624 A1**

(12) **EUROPEAN PATENT APPLICATION**

(43) Date of publication:
**25.08.2010 Bulletin 2010/34**

(51) Int Cl.:
**G01P 15/08** $^{(2006.01)}$ **G01P 15/18** $^{(2006.01)}$

(21) Application number: **09425069.3**

(22) Date of filing: **19.02.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(71) Applicant: **Sintesi SCpA
70026 Modugno, BA (IT)**

(72) Inventor: **Guadagno, Gianluca
70026 Modugno (Bari) (IT)**

(74) Representative: **Notaro, Giancarlo
Buzzi, Notaro & Antonielli d'Oulx
Via Maria Vittoria 18
10123 Torino (IT)**

(54) **Method for estimating the angular acceleration and related inertial measurement unit**

(57) A method for estimating the angular acceleration for an acceleration sensor (10), which includes at least three tri-axial accelerometers (S) arranged in a plane. The method includes:

- acquiring (22) the linear acceleration ($\mathbf{a}^{S_i}$) of each tri-axial accelerometer (S); and
- estimating (24) the angular acceleration ($\dot{\omega}$) of the acceleration sensor (10) as a function of the linear accelerations ($\mathbf{a}^{S_i}$) of the tri-axial accelerometers (S).

**Fig. 1**

EP 2 221 624 A1

**Description**

Field of the invention

The present invention relates to inertial measurement units.
The present invention has been developed in particular for inertial measurement units that include a plurality of tri-axial accelerometers.

State of the art

Inertial measurement units (IMUs) of the most widespread type are equipped with an orthogonal set of three accelerometers and an orthogonal set of three gyroscopes, so as to supply the user with the measurement of tri-axial linear accelerations and tri-axial angular velocities referred to a system of coordinates fixed with respect to the body of the unit. IMUs have historically been used in systems of air or land navigation, for civil or military applications.
Even though there exist IMUs capable of supplying extremely accurate measurements of inertial quantities, the cost associated to them can become particularly burdensome, rendering application thereof difficult in certain areas of interest, such as industrial automation, robotics, and production systems. Furthermore, commercial IMUs frequently present characteristics (in terms of range and working frequencies) that are far from suited to the applications referred to previously.
Amongst the factors for which the cost of accurate IMUs is so high the following may be identified:

- limited and high-level market (air, sea, and land navigation, both civil and military);
- demand by the aforesaid market for extremely high standards of reliability;
- integration of advanced functions of data processing, compensation, and transmission;
- high cost (and encumbrance) of precision gyroscopes, typically fibre-optic gyroscopes (FOGs).

Summary of the invention

The object of the invention is to provide an inertial measurement unit that is less costly and that at the same time achieves excellent results in terms of precision.
With a view to achieving the aforesaid purpose, the subject of the invention is a method for estimating angular acceleration of the type specified in the annexed Claim 1. The invention also relates to a corresponding inertial measurement unit, as well as to a computer-program product that can be loaded into the memory of at least one processor and comprises portions of software code that can implement the steps of the method when the product is run on at least one processor. As used herein, the reference to such a computer-program product is understood as being equivalent to the reference to a computer-readable means containing instructions for control of the processing system for co-ordinating implementation of the method according to the invention. Reference to "at least one processor" is evidently intended to highlight the possibility for the present invention to be implemented in a modular and/or distributed way.
Further advantageous characteristics of the invention form the subject of the annexed dependent claims.
The claims form an integral part of the technical teaching provided herein in relation to the invention.
The embodiments described herein envisage a solution alternative to traditional inertial platforms for improving the precision of the measurements, for instance, for subsequently improving also a possible control in the field of robotics and of industrial automation.
The proposed solution envisages an inertial measurement unit without gyroscopes, made up exclusively of low-cost tri-axial accelerometers, for example of the MEMS (Micro Electro-Mechanical Systems) type.
In an embodiment, said information is processed for reconstructing the inertial quantities of interest (linear acceleration and angular acceleration).
In an embodiment, a Bayesian estimation is used, which permits to improve the quality of the measurement.
By means of an appropriate choice of the geometrical arrangement of the tri-axial accelerometers, it is possible to solve the equations that describe the relative accelerations between the two reference systems so as to isolate the terms regarding angular acceleration.

Brief description of the figures

The invention will now be described with reference to the annexed drawings, which are provided purely by way of non-limiting example and in which:

- Figure 1 shows a block diagram of the inertial measurement unit; and

- Figure 2 represents the reference systems of the inertial sensor.

Detailed description of the invention

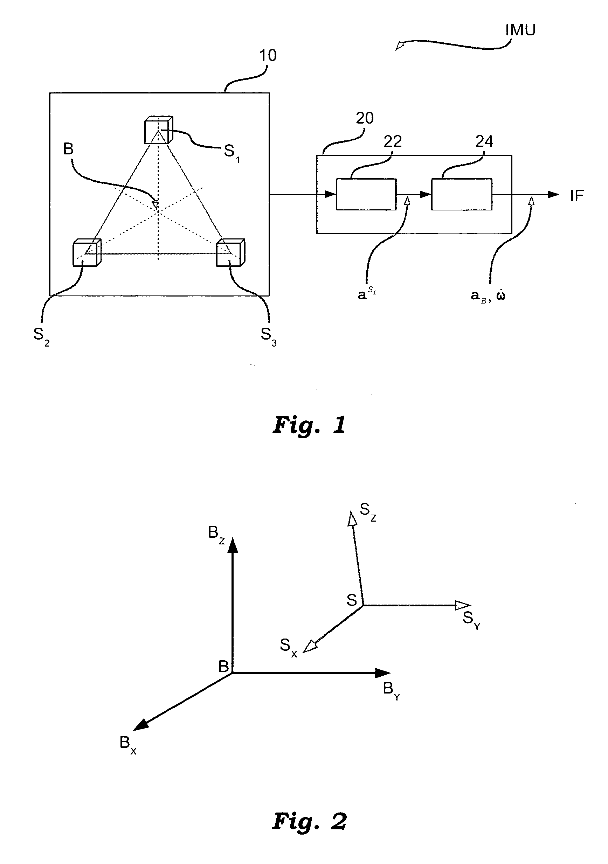

The diagram of principle of the inertial measurement unit IMU is given in Figure 1.

The measurement unit IMU is constituted by a sensor 10 that comprises a plurality of tri-axial accelerometers S (with corresponding analog-conditioning and sampling circuitry).

In an embodiment, the measurement unit also includes a processing unit 20, for example a microcontroller or DSP.

In an embodiment, the processing unit 20 includes a first module 22, which performs the operations of calibration of the raw data and reconstructs the linear accelerations of the tri-axial accelerometers S.

In an embodiment, the linear accelerations of the individual tri-axial accelerometers S are supplied to a module 24, which processes said data for reconstructing the linear acceleration and angular acceleration of the entire sensor 10.

In an embodiment, the operations of the modules 22 and/or 24 are executed on an external processing unit, such as, for example, a PC.

Furthermore, the processing unit 20 envisages an interface IF for communication with the outside world (e.g., a PC), preferably by means of standard digital protocols (RS-232, RS-485, Ethernet, CAN, etc.).

The data returned can be used both for read-out alone and for sending to a control unit of a machine or of an industrial manipulator.

Provided according to the invention is an array of N tri-axial accelerometers (with $N \geq 3$) arranged in a plane.

In the embodiment illustrated, three tri-axial accelerometers $S_1$, $S_2$, and $S_3$ are present.

To study the configuration, a reference system is identified, designated by "Body" B, to which the physical quantities measured by the individual sensors are referred.

Figure 2 shows an example of a reference system Body B with axes $[B_X, B_Y, B_Z]$, and a reference system of an individual tri-axial acceleration sensor S with axes $[S_X, S_Y, S_Z]$.

In an embodiment, the acceleration measured by the individual sensor S is linked to the acceleration of the (geometrical) centroid B of the array:

$$
\begin{aligned}
\mathbf{R}^{B}_{S_1} \mathbf{a}^{S_1} &= \mathbf{a}_B + \dot{\boldsymbol{\omega}} \times \mathbf{r}_{S_1} + \boldsymbol{\omega} \times \left( \boldsymbol{\omega} \times \mathbf{r}_{S_1} \right) \\
\mathbf{R}^{B}_{S_2} \mathbf{a}^{S_2} &= \mathbf{a}_B + \dot{\boldsymbol{\omega}} \times \mathbf{r}_{S_2} + \boldsymbol{\omega} \times \left( \boldsymbol{\omega} \times \mathbf{r}_{S_2} \right) \\
&\vdots \\
\mathbf{R}^{B}_{S_N} \mathbf{a}^{S_N} &= \mathbf{a}_B + \dot{\boldsymbol{\omega}} \times \mathbf{r}_{S_N} + \boldsymbol{\omega} \times \left( \boldsymbol{\omega} \times \mathbf{r}_{S_N} \right)
\end{aligned}
\tag{1}
$$

where

- $\mathbf{a}^{S_i} = [a_{i,x}\, a_{i,y}\, a_{i,z}]^T$ is the acceleration of the $i$-th MEMS sensor in its own reference system;
- $\mathbf{a}_B = [a_{B,x}\, a_{B,y}\, a_{B,z}]^T$ is the acceleration of the centroid in the reference system Body;

- $\mathbf{R}^{B}_{S_i}$ is the rotation matrix from the reference system of the individual sensor to the reference system Body;

- $\dot{\boldsymbol{\omega}} = [\dot{\omega}_x\, \dot{\omega}_y\, \dot{\omega}_z]^T$ is the angular acceleration of the centroid in the reference system Body;
- $\omega) = [\omega_x\, \omega_y\, \omega_z]^T$ is the angular velocity of the centroid in the reference system Body; and
- $\mathbf{r}_{S_i} = [r_{i,x}\, r_{i,y}\, r_{i,z}]^T$ is the distance of the $i$-th sensor from the centroid.

In an embodiment, the reference systems of the sensors S and of the centroid B are all parallel, and hence the rotation matrices $\mathbf{R}^{B}_{S_i}$ can be ignored.

In an embodiment, the linear acceleration at the geometrical centroid B is estimated on the basis of the arithmetic mean of the accelerations of the individual sensors S

$$
\mathbf{a}_B = \frac{1}{N} \sum_{i=1}^{N} \mathbf{a}^{S_i}
\tag{2}
$$

In an embodiment, each row of Eq. (1) is expressed, formulating the vector products by means of the corresponding antisymmetrical matrices $\mathbf{B}(\dot{\omega})$ and $\mathbf{B}(\omega)^2$, as

$$\mathbf{a}^{S_i} = \mathbf{a}_B + \mathbf{B}(\dot{\omega})\mathbf{r}_i + \mathbf{B}(\omega)^2 \mathbf{r}_i = \mathbf{a}_B + \mathbf{W}\mathbf{r}_i \qquad (3)$$

where the antisymmetrical matrix is defined, for a generic three-component vector $\mathbf{q} = [q_x \, q_y \, q_z]^T$, as

$$\mathbf{B}(\mathbf{q}) = \begin{bmatrix} 0 & -q_z & q_y \\ q_z & 0 & -q_x \\ -q_y & q_x & 0 \end{bmatrix}$$

and where designated by $\mathbf{W}$ is the following angular tensor:

$$\mathbf{W} = \mathbf{B}(\dot{\omega}) + \mathbf{B}(\omega)^2 = \begin{bmatrix} -\omega_y^2 - \omega_z^2 & -\dot{\omega}_z + \omega_x\omega_y & \dot{\omega}_y + \omega_x\omega_z \\ \dot{\omega}_z + \omega_x\omega_y & -\omega_x^2 - \omega_z^2 & -\dot{\omega}_x + \omega_y\omega_z \\ -\dot{\omega}_y + \omega_x\omega_z & \dot{\omega}_x + \omega_y\omega_z & -\omega_x^2 - \omega_y^2 \end{bmatrix}$$

Organizing by columns the accelerations of the *N* sensors S, the accelerations at the centroid B, and the distances of the sensors S from the latter, and defining the following matrices:

$$\mathbf{A} = \begin{bmatrix} a_{1,x} & a_{2,x} & \cdots & a_{N,x} \\ a_{1,y} & a_{2,y} & \cdots & a_{N,y} \\ a_{1,z} & a_{2,z} & \cdots & a_{N,z} \end{bmatrix}$$

$$\mathbf{A}_B = \begin{bmatrix} a_{B,x} & a_{B,x} & \cdots & a_{B,x} \\ a_{B,y} & a_{B,y} & \cdots & a_{B,y} \\ a_{B,z} & a_{B,z} & \cdots & a_{B,z} \end{bmatrix}$$

$$\mathbf{R} = \begin{bmatrix} r_{1,x} & r_{2,x} & \cdots & r_{N,x} \\ r_{1,y} & r_{2,y} & \cdots & r_{N,y} \\ r_{1,z} & r_{2,z} & \cdots & r_{N,z} \end{bmatrix}$$

we can write

$$(\mathbf{A} - \mathbf{A}_B) = \mathbf{W}\mathbf{R}$$

For a planar arrangement of the accelerometers S, the matrix **R** has the last row zero, and consequently the last column of **W** loses observability. Reducing the dimensions of **R** and of **W** so as to render significant the product **W⁻R⁻** it is possible to solve the preceding equation by writing

$$\mathbf{W}^- = \left(\mathbf{A} - \mathbf{A}_B\right)\left(\mathbf{R}^-\right)^+ = \begin{bmatrix} -\omega_y^2 - \omega_z^2 & -\dot{\omega}_z + \omega_x\omega_y \\ \dot{\omega}_z + \omega_x\omega_y & -\omega_x^2 - \omega_z^2 \\ -\dot{\omega}_y + \omega_x\omega_z & \dot{\omega}_x + \omega_y\omega_z \end{bmatrix} \qquad (4)$$

where by $(\mathbf{R}^-)^+$ is meant the right-hand pseudo-inverse matrix of $\mathbf{R}^-$, defined below:

$$\mathbf{R}^- = \begin{bmatrix} r_{1,x} & r_{2,x} & \cdots & r_{N,x} \\ r_{1,y} & r_{2,y} & \cdots & r_{N,y} \end{bmatrix}$$

From Eq. (4), by combining the different terms of the reduced angular tensor **W⁻**, the following quantities can be defined:

$$\mathbf{u} = \begin{bmatrix} \dot{\omega}_x + \omega_y\omega_z \\ \dot{\omega}_y - \omega_x\omega_z \\ \dot{\omega}_z \end{bmatrix} = \begin{bmatrix} \mathbf{W}^-_{3,2} \\ -\mathbf{W}^-_{3,1} \\ \left(\mathbf{W}^-_{2,1} - \mathbf{W}^-_{1,2}\right)/2 \end{bmatrix} = \mathbf{Ja} \qquad (5)$$

$$\mathbf{y} = \begin{bmatrix} \omega_x\omega_y \\ \omega_x^2 + \omega_z^2 \\ \omega_y^2 + \omega_z^2 \end{bmatrix} = \begin{bmatrix} \left(\mathbf{W}^-_{2,1} + \mathbf{W}^-_{1,2}\right)/2 \\ -\mathbf{W}^-_{2,2} \\ -\mathbf{W}^-_{1,1} \end{bmatrix} = \mathbf{Ka} \qquad (6)$$

where by $\mathbf{W}^-_{i,j}$ is meant the element in the *i*-th row and in the *j*-th column of the matrix **W⁻** and by **a** the vector obtained by organizing by rows the accelerations of the *N* sensors S:

$$\mathbf{a} = \begin{bmatrix} a_{1,x} & a_{1,y} & a_{1,z} & a_{2,x} & a_{2,y} & \cdots & a_{N,z} \end{bmatrix}^T$$

In an embodiment, the matrices **J** and **K** of Eqs. (5) and (6) are obtained from the following identity:

$$\mathbf{W}^- = \left(\mathbf{A} - \mathbf{A}_B\right)\left(\mathbf{R}^-\right)^+ = \mathbf{A}\left(\mathbf{R}^-\right)^+ - \mathbf{A}_B\left(\mathbf{R}^-\right)^+ = \mathbf{A}\left(\mathbf{R}^-\right)^+$$

where the last equality follows from the definition of centroid. In fact, since the sum of the rows of the matrix **R** is zero, the sum of the columns of its pseudo-inverse is zero. For convenience of notation, the element in the i-th row and in the *j*-th column of the matrix $(\mathbf{R}^-)^+$ will be designated by $\tilde{\mathbf{R}}_{i,j}$. By developing the products we obtain

$$\mathbf{u} =$$

$$\left[\begin{array}{c} a_{1,z}\tilde{\mathbf{R}}_{1,2} + a_{2,z}\tilde{\mathbf{R}}_{2,2} + \ldots + a_{N,z}\tilde{\mathbf{R}}_{N,2} \\ - a_{1,z}\tilde{\mathbf{R}}_{1,1} - a_{2,z}\tilde{\mathbf{R}}_{2,1} - \ldots - a_{N,z}\tilde{\mathbf{R}}_{N,1} \\ \frac{1}{2}\left(a_{1,y}\tilde{\mathbf{R}}_{1,1} + a_{2,y}\tilde{\mathbf{R}}_{2,1} + \ldots + a_{N,y}\tilde{\mathbf{R}}_{N,1} - a_{1,x}\tilde{\mathbf{R}}_{1,2} - a_{2,x}\tilde{\mathbf{R}}_{2,2} - \ldots - a_{N,x}\tilde{\mathbf{R}}_{N,2}\right) \end{array}\right]$$

$$(7)$$

$$\mathbf{y} =$$

$$\left[\begin{array}{c} \frac{1}{2}\left(a_{1,y}\tilde{\mathbf{R}}_{1,1} + a_{2,y}\tilde{\mathbf{R}}_{2,1} + \ldots + a_{N,y}\tilde{\mathbf{R}}_{N,1} + a_{1,x}\tilde{\mathbf{R}}_{1,2} + a_{2,x}\tilde{\mathbf{R}}_{2,2} + \ldots + a_{N,x}\tilde{\mathbf{R}}_{N,2}\right) \\ - a_{1,y}\tilde{\mathbf{R}}_{1,2} - a_{2,y}\tilde{\mathbf{R}}_{2,2} - \ldots - a_{N,y}\tilde{\mathbf{R}}_{N,2} \\ - a_{1,x}\tilde{\mathbf{R}}_{1,1} - a_{2,x}\tilde{\mathbf{R}}_{2,1} - \ldots - a_{N,x}\tilde{\mathbf{R}}_{N,1} \end{array}\right]$$

$$(8)$$

Hence

$$\mathbf{J} = \left[\begin{array}{cccccc} 0 & 0 & \tilde{\mathbf{R}}_{1,2} & 0 & 0 & \tilde{\mathbf{R}}_{N,2} \\ 0 & 0 & -\tilde{\mathbf{R}}_{1,1} & \cdots & 0 & 0 & -\tilde{\mathbf{R}}_{N,1} \\ -\frac{1}{2}\tilde{\mathbf{R}}_{1,2} & \frac{1}{2}\tilde{\mathbf{R}}_{1,1} & 0 & -\frac{1}{2}\tilde{\mathbf{R}}_{N,2} & \frac{1}{2}\tilde{\mathbf{R}}_{N,1} & 0 \end{array}\right]$$

$$(9)$$

$$\mathbf{K} = \left[\begin{array}{cccccc} \frac{1}{2}\tilde{\mathbf{R}}_{1,2} & \frac{1}{2}\tilde{\mathbf{R}}_{1,1} & 0 & \frac{1}{2}\tilde{\mathbf{R}}_{N,2} & \frac{1}{2}\tilde{\mathbf{R}}_{N,1} & 0 \\ 0 & -\tilde{\mathbf{R}}_{1,2} & 0 & \cdots & 0 & -\tilde{\mathbf{R}}_{N,2} & 0 \\ -\tilde{\mathbf{R}}_{1,1} & 0 & 0 & -\tilde{\mathbf{R}}_{N,1} & 0 & 0 \end{array}\right] \qquad (10)$$

In an embodiment, an estimation is used in order to be able to solve the dynamic system for the inertial sensor.

In an embodiment, the angular acceleration $\dot{\omega}$ is estimated on the basis of the following model:

$$\dot{\omega} = \mathbf{u} + \left[\begin{array}{ccc} -\omega_y\omega_z & \omega_x\omega_z & 0 \end{array}\right]^T = \mathbf{Ja} + \left[\begin{array}{ccc} -\omega_y\omega_z & \omega_x\omega_z & 0 \end{array}\right]^T$$

In an embodiment, an estimation algorithm has been used, which, through the knowledge of the initial conditions, the measurements of the accelerations, and the knowledge of the statistical characterization of the quantities under examination, enables an estimation of angular acceleration to which the entire unit is subjected to be made.

One of the most widely used formulations for describing a dynamic system is the so-called state-input-output representation, i.e.,

$$\begin{cases} \dot{\mathbf{x}} = f(\mathbf{x}, \mathbf{u}, t; \mathbf{v}) \\ \mathbf{y} = g(\mathbf{x}, \mathbf{u}, t; \mathbf{w}) \end{cases} \qquad (11)$$

where **x** and **y** are, respectively, the state and the output of the system, whilst **u** is a known input. The functions *f* (transition of state) and *g* (observation) are, generally, nonlinear. Furthermore, also the disturbances **v** and **w**, of known or estimatable covariance, and the dependence upon time *t* are rendered explicit.

In an embodiment, starting from a discrete-time version of the system (11), the state is estimated recursively by propagating the state itself together with its covariance from one instant of time to the next.

In the case where the functions *f* and *g* are linear, the "optimal" solution of the recursive estimation of the state would be the Kalman filter (KF). Given the presence of nonlinearities in the equations of the inertial sensor, it has been chosen to use in an embodiment an extended Kalman filter (EKF). This choice is particularly interesting in the case where the processing unit within the inertial sensor makes all the estimations, because the computational resources on board the inertial sensor are usually limited.

To draw up the estimation algorithm for the quantities of interest of the inertial sensor, it is necessary to define the functions *f* and *g* that appear in the general formulation of Eq. (11).

In an embodiment, denoting by *k* the discrete index of time, the state $\mathbf{x}_k$ is represented by the angular velocity, and hence $\mathbf{x}_k = [x_{1,k}\ x_{2,k}\ x_{3,k}]^T = [\omega_{x,k}\ \omega_{y,k}\ \omega_{z,k}]^T$, the input $\mathbf{u}_k$ is $\mathbf{Ja}_k$, and the observation $\mathbf{y}_k$ is $\mathbf{Ka}_k$, as given in Eqs. (5), (6), (9) and (10). Denoting by $\Delta t$ the sampling step, we obtain

$$\dot{\boldsymbol{\omega}}_k \ = \ \mathbf{u}_k \ + \ \begin{bmatrix} -\omega_{y,k}\omega_{z,k} & \omega_{x,k}\omega_{z,k} & 0 \end{bmatrix}^T$$

$$\boldsymbol{\omega}_{k+1} \ = \ \boldsymbol{\omega}_k \ + \ \dot{\boldsymbol{\omega}}_k \Delta t$$

Hence

$$\begin{cases} \mathbf{x}_{k+1} \ = \ \mathbf{x}_k \ + \ \left( \mathbf{u}_k \ + \ \begin{bmatrix} -x_{2,k}x_{3,k} & x_{1,k}x_{3,k} & 0 \end{bmatrix}_k^T \right)\Delta t \\ \mathbf{y}_k \ = \ \begin{bmatrix} \omega_{x,k}\omega_{y,k} \\ \omega_{x,k}^2 + \omega_{z,k}^2 \\ \omega_{y,k}^2 + \omega_{z,k}^2 \end{bmatrix} = \begin{bmatrix} x_{1,k}x_{2,k} \\ x_{1,k}^2 + x_{3,k}^2 \\ x_{2,k}^2 + x_{3,k}^2 \end{bmatrix} = \mathbf{Ka}_k \end{cases} \tag{12}$$

In an embodiment, the initial state at the instant *k* = 0 is set at $\mathbf{x}_0 = [0\ 0\ 0]^T$.

In an embodiment, starting from the instant *k* = 0 and setting the initial state, for example, at $\mathbf{x}_0 = [0\ 0\ 0]^T$ and the covariance of the initial state at $\mathbf{P}_0 = \mathbf{Q}/\Delta t$, at each instant of time it is possible to apply the equations of the EKF, as given below:

$$\begin{aligned} \mathbf{x}_{k+1}^- &= f_k(\mathbf{x}_k, \mathbf{u}_k) = \mathbf{x}_k + \begin{bmatrix} -\mathbf{x}_{2,k}\mathbf{x}_{3,k} & \mathbf{x}_{1,k}\mathbf{x}_{3,k} & 0 \end{bmatrix}^T \Delta t + \mathbf{u}_k \Delta t \\ \mathbf{P}_{k+1}^- &= \mathbf{F}_k \mathbf{P}_k \mathbf{F}_k^T + \mathbf{Q} \end{aligned} \tag{13}$$

$$\hat{\mathbf{y}}_k = g_k(\mathbf{x}_k) = \begin{bmatrix} \mathbf{x}_{1,k+1}^- \mathbf{x}_{2,k+1}^- \\ \left(\mathbf{x}_{1,k+1}^-\right)^2 + \left(\mathbf{x}_{3,k+1}^-\right)^2 \\ \left(\mathbf{x}_{2,k+1}^-\right)^2 + \left(\mathbf{x}_{3,k+1}^-\right)^2 \end{bmatrix} \tag{14}$$

$$\mathbf{T}_k = \mathbf{P}_{k+1}^- \mathbf{G}_k^T + \mathbf{M}$$
$$\mathbf{D}_k = \mathbf{G}_k \mathbf{T}_k + \mathbf{M}^T \mathbf{G}_k^T + \mathbf{V} \qquad (15)$$
$$\mathbf{L}_k = \mathbf{T}_k \mathbf{D}_k^{-1}$$

$$\mathbf{P}_{k+1} = \mathbf{P}_{k+1}^- - \mathbf{L}_k \mathbf{T}_k^T$$
$$\mathbf{x}_{k+1} = \mathbf{x}_{k+1}^- + \mathbf{L}_k \left( \mathbf{y}_k - \hat{\mathbf{y}}_k \right) \qquad (16)$$
$$\dot{\boldsymbol{\omega}}_{k+1} = \mathbf{u}_k + \begin{bmatrix} -\mathbf{x}_{2,k+1}\mathbf{x}_{3,k+1} & \mathbf{x}_{1,k+1}\mathbf{x}_{3,k+1} & 0 \end{bmatrix}^T$$

with

$$\mathbf{F}_k = \left. \frac{df_k(\mathbf{x}_k, \mathbf{u}_k)}{d\mathbf{x}} \right|_{\mathbf{x}=\mathbf{x}_k} = \begin{bmatrix} 1 & -\mathbf{x}_{3,k}\Delta t & -\mathbf{x}_{2,k}\Delta t \\ \mathbf{x}_{3,k}\Delta t & 1 & \mathbf{x}_{1,k}\Delta t \\ 0 & 0 & 1 \end{bmatrix}$$

$$\mathbf{G}_k = \left. \frac{dg_k(\mathbf{x}_k)}{d\mathbf{x}} \right|_{\mathbf{x}=\mathbf{x}_{k+1}^-} = \begin{bmatrix} \mathbf{x}_{2,k+1}^- & \mathbf{x}_{1,k+1}^- & 0 \\ 2\mathbf{x}_{1,k+1}^- & 0 & 2\mathbf{x}_{3,k+1}^- \\ 0 & 2\mathbf{x}_{2,k+1}^- & 2\mathbf{x}_{3,k+1}^- \end{bmatrix}$$

$$\mathbf{Q} = \mathbf{J}\mathbf{C}\mathbf{J}^T \Delta t \qquad (17)$$
$$\mathbf{V} = \mathbf{K}\mathbf{C}\mathbf{K}^T / \Delta t$$
$$\mathbf{M} = \mathbf{J}\mathbf{C}\mathbf{K}^T$$

In Eqs. (17), $\mathbf{C}$ is the matrix of covariance of $\mathbf{a}$, which can be obtained, for example, experimentally, $\mathbf{F}_k$ and $\mathbf{G}_k$ are the Jacobians of the functions $f_k$ and $g_k$, and $\mathbf{Q}$, $\mathbf{V}$ and $\mathbf{M}$ are, respectively, the matrix of covariance of the state, the matrix of the observation, and the matrix of mutual covariance between state and observation.

In a non-conventional way, the result of the estimation is represented by the angular acceleration appearing in the last row of Eq. (16). As may be noted, the estimated angular acceleration is equal to the input of the estimator $\mathbf{u}$ corrected by nonlinear terms of the angular velocity. In order to annul the nonlinear part completely, a three-dimensional arrangement of the accelerometers should be used, which, however, has been excluded to optimize the dimensions, costs, and uncertainties of assembly of the measurement unit.

In an embodiment, the $N$ sensors S are set in points that define a regular plane polygon (e.g., an equilateral triangle, a square, a pentagon, etc.). In particular, by setting the $N$ sensors S at the vertices of a regular plane polygon, an estimation of angular acceleration is advantageously obtained, for which the terms of state covariance on the axes $x$ and $y$ are equal to one another and equal to twice the covariance on the axis $z$.

The nonlinearities present in the model are in any case very weak; i.e., they offer a finite number of differential terms when they are linearized, a fact that guarantees a good stability for the estimator used.

For example, in the case of three tri-axial accelerometers set at the vertices of an equilateral triangle, as given in Figure 1, $N$ is equal to 3, and the matrices $\mathbf{R}^-$ and $(\mathbf{R}^-)^+$ and the matrices $\mathbf{J}$ and $\mathbf{K}$ appearing in Eqs. (9) and (10) are the following:

$$\mathbf{R}^- = \mathbf{d} \begin{bmatrix} 1 & -1/2 & -1/2 \\ 0 & \sqrt{3}/2 & -\sqrt{3}/2 \end{bmatrix}$$

$$\left(\mathbf{R}^-\right)^+ = \frac{1}{\mathbf{d}}\begin{bmatrix} 2/3 & 0 \\ -1/3 & 1/\sqrt{3} \\ -1/3 & -1/\sqrt{3} \end{bmatrix}$$

$$\mathbf{J}_3 = \frac{1}{\mathbf{d}}\begin{bmatrix} 0 & 0 & 0 & 0 & 0 & 1/\sqrt{3} & 0 & 0 & -1/\sqrt{3} \\ 0 & 0 & -2/3 & 0 & 0 & 1/3 & 0 & 0 & 1/3 \\ 0 & 1/3 & 0 & -1/2\sqrt{3} & -1/6 & 0 & 1/2\sqrt{3} & -1/6 & 0 \end{bmatrix}$$

$$\mathbf{K}_3 = \frac{1}{\mathbf{d}}\begin{bmatrix} 0 & 1/3 & 0 & 1/2\sqrt{3} & -1/6 & 0 & -1/2\sqrt{3} & -1/6 & 0 \\ 0 & 0 & 0 & 0 & -1/\sqrt{3} & 0 & 0 & 1/\sqrt{3} & 0 \\ -2/3 & 0 & 0 & 1/3 & 0 & 0 & 1/3 & 0 & 0 \end{bmatrix}$$

where **d** is the radius of the circle circumscribed to the equilateral triangle.

The advantages of the proposed solution, in the case of applications for industrial automation, robotics, and machine tools, are the following:

- the cost and encumbrance are contained thanks to the planar arrangement of the tri-axial accelerometers;
- the sensor is designed to return all six accelerations, three linear ones and three angular ones, and not linear accelerations and angular velocities (which is typical of IMUs); it is, hence, a hexa-axial accelerometric sensor; in any case, the angular velocities represent the state of the estimation system, and hence can be returned even so.

Of course, without prejudice to the principle of the invention, the details of construction and the embodiments may vary widely with respect to what has been described and illustrated herein purely by way of example, without thereby departing from the scope of the present invention, as defined by the ensuing claims.

**Claims**

1.  A method for estimating the angular acceleration for an acceleration sensor (10), said acceleration sensor (10) including $N$ tri-axial accelerometers (S) arranged in a plane, where $N$ is an integer and is at least equal to 3, and where said method includes:

    - acquiring (22) the linear acceleration ($\mathbf{a}^{S_i}$) of each tri-axial accelerometer (S), and
    - estimating (24) the angular acceleration ($\dot{\omega}$) of the acceleration sensor (10) as a function of the linear accelerations ($\mathbf{a}^{S_i}$) of the tri-axial accelerometers (S).

2.  The method according to Claim 1, wherein said method includes:

    - estimating (24) the linear acceleration ($\mathbf{a}_B$) of the acceleration sensor (10) as a function of the linear accelerations of the tri-axial accelerometers (S).

3.  The method according to Claim 2, wherein said linear acceleration ($\mathbf{a}_B$) of the acceleration sensor (10) is estimated (24) on the basis of the average of the accelerations of the individual tri-axial accelerometers (S).

**4.** The method according to Claim 2 or Claim 3, wherein said method includes:

- estimating (24) said angular acceleration ($\dot{\omega}$) of the acceleration sensor (10) at the geometrical centroid (B) of the tri-axial accelerometers (S).

**5.** The method according to Claim 4, wherein said angular acceleration ($\dot{\omega}$) is estimated (24) on the basis of the following model:

$$
\begin{aligned}
\mathbf{R}^{B}_{S_1}\mathbf{a}^{S_1} &= \mathbf{a}_B + \dot{\boldsymbol{\omega}} \times \mathbf{r}_{S_1} + \boldsymbol{\omega} \times \left(\boldsymbol{\omega} \times \mathbf{r}_{S_1}\right) \\
\mathbf{R}^{B}_{S_2}\mathbf{a}^{S_2} &= \mathbf{a}_B + \dot{\boldsymbol{\omega}} \times \mathbf{r}_{S_2} + \boldsymbol{\omega} \times \left(\boldsymbol{\omega} \times \mathbf{r}_{S_2}\right) \\
&\vdots \\
\mathbf{R}^{B}_{S_N}\mathbf{a}^{S_N} &= \mathbf{a}_B + \dot{\boldsymbol{\omega}} \times \mathbf{r}_{S_N} + \boldsymbol{\omega} \times \left(\boldsymbol{\omega} \times \mathbf{r}_{S_N}\right)
\end{aligned}
$$

where

- $\mathbf{a}^{S_i} = [a_{i,x}\ a_{i,y}\ a_{i,z}]^T$ is the acceleration of the $i$-th tri-axial accelerometer (S) in its own reference system;
- $\mathbf{a}_B = [a_{B,x}\ a_{B,y}\ a_{B,z}]^T$ is the acceleration of said centroid (B) in its own reference system;

- $\mathbf{R}^{B}_{S_i}$ is the rotation matrix from the reference system of the individual tri-axial accelerometer (S) to the reference system of the centroid (B);
- $\dot{\omega} = [\dot{\omega}_x\ \dot{\omega}_y\ \dot{\omega}_z]^T$ is the angular acceleration of the centroid (B) in its own reference system;
- $\omega = [\omega_x\ \omega_y\ \omega_z]^T$ is the angular velocity of the centroid (B) in its own reference system; and
- $\mathbf{r}_{S_i} = [r_{i,x}\ r_{i,y}\ r_{i,z}]^T$ is the distance of the $i$-th tri-axial accelerometer (S) from the centroid (B).

**6.** The method according to Claim 5, wherein the reference systems of the tri-axial accelerometers (S) and of the centroid (B) are all parallel, and hence the rotation matrices $\mathbf{R}^{B}_{S_i}$ are ignored.

**7.** The method according to Claim 6, wherein said angular acceleration ($\dot{\omega}$) is estimated (24) on the basis of the following model:

$$
\dot{\boldsymbol{\omega}} = \mathbf{J}\mathbf{a} + \begin{bmatrix} -\omega_y\omega_z & \omega_x\omega_z & 0 \end{bmatrix}^T
$$

where $\mathbf{a}$ is the vector obtained by organizing by rows the accelerations of the $N$ sensors (S) : and

$$
\mathbf{J} = \begin{bmatrix}
0 & 0 & \tilde{\mathbf{R}}_{1,2} & & 0 & 0 & \tilde{\mathbf{R}}_{N,2} \\
0 & 0 & -\tilde{\mathbf{R}}_{1,1} & \cdots & 0 & 0 & -\tilde{\mathbf{R}}_{N,1} \\
-\tfrac{1}{2}\tilde{\mathbf{R}}_{1,2} & \tfrac{1}{2}\tilde{\mathbf{R}}_{1,1} & 0 & & -\tfrac{1}{2}\tilde{\mathbf{R}}_{N,2} & \tfrac{1}{2}\tilde{\mathbf{R}}_{N,1} & 0
\end{bmatrix}
$$

where $\tilde{\mathbf{R}}_{i,j}$ is the element in the i-th row and in the $j$-th column of the matrix $(\mathbf{R}^-)^+$, where $(\mathbf{R}^-)^+$ is the right-hand pseudo-inverse matrix of the matrix $\mathbf{R}^-$

$$
\mathbf{R}^- = \begin{bmatrix}
r_{1,x} & r_{2,x} & \cdots & r_{N,x} \\
r_{1,y} & r_{2,y} & \cdots & r_{N,y}
\end{bmatrix}.
$$

**8.** The method according to Claim 7, wherein said angular acceleration ($\dot{\omega}$) is estimated (24) recursively.

**9.** The method according to Claim 8, wherein said angular acceleration ($\dot{\omega}$) is estimated (24) recursively at the instant $k$ for a time interval $\Delta t$ on the basis of the following state-input-output model, where

$$\mathbf{x}_k = \begin{bmatrix} x_{1,k} & x_{2,k} & x_{3,k} \end{bmatrix}^T = \begin{bmatrix} \omega_{x,k} & \omega_{y,k} & \omega_{z,k} \end{bmatrix}^T$$

is the state represented by the angular velocity, and **y** is the output represented by the quadratic terms of the angular velocity

$$\begin{cases} \mathbf{x}_{k+1} = \mathbf{x}_k + \left( \mathbf{u}_k + \begin{bmatrix} -x_{2,k}x_{3,k} & x_{1,k}x_{3,k} & 0 \end{bmatrix}_k^T \right) \Delta t \\ \mathbf{y}_k = \begin{bmatrix} x_{1,k}x_{2,k} \\ x_{1,k}^2 + x_{3,k}^2 \\ x_{2,k}^2 + x_{3,k}^2 \end{bmatrix} = \mathbf{Ka}_k \end{cases}$$

where

$$\mathbf{u}_k = \mathbf{Ja}_k,$$

and

$$\mathbf{K} = \begin{bmatrix} \frac{1}{2}\tilde{\mathbf{R}}_{1,2} & \frac{1}{2}\tilde{\mathbf{R}}_{1,1} & 0 & & \frac{1}{2}\tilde{\mathbf{R}}_{N,2} & \frac{1}{2}\tilde{\mathbf{R}}_{N,1} & 0 \\ 0 & -\tilde{\mathbf{R}}_{1,2} & 0 & \cdots & 0 & -\tilde{\mathbf{R}}_{N,2} & 0 \\ -\tilde{\mathbf{R}}_{1,1} & 0 & 0 & & -\tilde{\mathbf{R}}_{N,1} & 0 & 0 \end{bmatrix}.$$

**10.** The method according to Claim 9, wherein the method includes propagating the state together with its covariance from one instant of time to the next.

**11.** The method according to Claim 10, wherein said estimation (24) of angular acceleration ($\dot{\omega}$) includes using an extended Kalman filter.

**12.** An inertial measurement unit (IMU), **characterized in that** said inertial measurement unit (IMU) includes:

- an acceleration sensor (10), said acceleration sensor (10) including $N$ tri-axial accelerometers (S) arranged in a plane, where $N$ is an integer and is at least equal to 3; and
- a processing unit (20), said processing unit (20) being configured for implementing the method of estimation according to any one of Claims 1 to 11.

**13.** The inertial measurement unit (IMU) according to Claim 12, wherein said tri-axial accelerometers (S) are of the MEMS type.

**14.** The inertial measurement unit (IMU) according to Claim 12 or Claim 13, wherein said tri-axial accelerometers (S) are set at the vertices of a regular polygon.

**15.** A computer-program product that can be loaded into the memory of at least one processor and comprises portions of software code for implementing the method according to any one of Claims 1 to 11.

10

IMU

20

22

24

S₁

B

S₂

S₃

IF

$\mathbf{a}^{S_1}$

$\mathbf{a}_B, \dot{\omega}$

*Fig. 1*

$B_z$

$S_z$

S

$S_Y$

$S_x$

B

$B_Y$

$B_x$

*Fig. 2*

Europäisches
Patentamt
European
Patent Office
Office européen
des brevets

**EUROPEAN SEARCH REPORT**

Application Number

EP 09 42 5069

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/111100 A (SINTESI S C P A [IT]; GUADAGNO GIANLUCA [IT]; NEGRI GIANPIERO [IT]; VE) 18 September 2008 (2008-09-18) * the whole document * ----- | 1-15 | INV. G01P15/08 G01P15/18 |
| X | JIN XUDAN ET AL: "Research on Gyroscope Free Strapdown Inertial Navigation System Based on 3-axis accelerometer" ELECTRONIC MEASUREMENT AND INSTRUMENTS, 2007. ICEMI '07. 8TH INTE RNATIONAL CONFERENCE ON, IEEE, PI, 1 August 2007 (2007-08-01), pages 1-967, XP031148153 ISBN: 978-1-4244-1135-1 * the whole document * ----- | 1-15 | |

TECHNICAL FIELDS
SEARCHED (IPC)

G01P

The present search report has been drawn up for all claims

| Place of search | Date of completion of the search | Examiner |
|---|---|---|
| The Hague | 17 July 2009 | Reto, Davide |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

                                      
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 09 42 5069

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2009

| Patent document cited in search report | Publication date | Patent family member(s) | Publication date |
|---|---|---|---|
| WO 2008111100 A | 18-09-2008 | NONE | |

EPO FORM P0459

For more details about this annex : see Official Journal of the European Patent Office, No. 12/82